# EUROPEAN PATENT APPLICATION

(11) **EP 4 145 841 A1**
(43) Date of publication of application: **08.03.2023**
(21) Application number: 22165522.8
(22) Date of filing: 30.03.2022
(51) Int. Cl.: H04N 21/4788, H04N 21/2743, H04N 21/262, H04N 21/4784, H04N 21/258, H04N 21/488, H04N 21/8545, H04N 21/2187

(54) **METHOD FOR INTERACTING IN LIVE STREAMING AND ELECTRONIC DEVICE**

(30) Priority: 06.09.2021 CN 202111036939
(71) Applicant: Beijing Dajia Internet Information Technology Co., Ltd., Beijing 100085 (CN)
(72) Inventor: CHEN, Yixing, Beijing (CN); TAN, Shuai, Beijing (CN); PEI, Jiahua, Beijing (CN); XIE, Wannan, Beijing (CN)
(74) Representative: Yang, Shu

(57) **Abstract**

A method for interacting in live streaming is provided, including: creating (S103) an interaction event based on an interaction between a first account and a second account; determining (S103) first article information set by the first account and second article information set by the second account as target article information associated with the interaction event; and sending (S104) first prompt information to a first associated account and a second associated account.

## Description

### TECHNICAL FIELD

The present disclosure relates to the field of network technologies, and in particular relates to a method for interacting in live streaming and an electronic device.

### BACKGROUND

Nowadays, with the development of "we media", a large number of live streaming platforms have emerged. Users of the live streaming platforms are usually divided into two types: the first type users include users who mainly make live streaming on the platforms, namely, anchors; and the second type users are ordinary audiences who watch the live streaming of the first type users through the platforms. In the live streaming platforms, the second type users (the ordinary audiences) can perform operations (such as giving likes and giving rewards) on the first type users (the anchors) when watching the live streaming of the first type users.

### SUMMARY

The present disclosure provides a method for interacting in live streaming and an electronic device. The technical solutions are as follows.

In an aspect, a method for interacting in live streaming is provided. The method includes: creating an interaction event based on an interaction between a first account and a second account; determining first article information set by the first account and second article information set by the second account as target article information associated with the interaction event, the target article information representing a physical prize of the interaction event; and sending first prompt information to a first associated account and a second associated account, the first prompt information being configured to instruct terminals of the first associated account and the second associated account to display the target article information and the interaction event, wherein the first associated account is an account accessing a live streaming room of the first account, and the second associated account is an account accessing a live streaming room of the second account.

In an aspect, an apparatus for interacting in live streaming is provided. The apparatus includes: a creating unit configured to create an interaction event based on an interaction between a first account and a second account, wherein the creating unit is further configured to determine first article information set by the first account and second article information set by the second account as target article information associated with the interaction event, the target article information representing a physical prize of the interaction event; and a sending unit configured to send first prompt information to a first associated account and a second associated account, the first prompt information being configured to instruct terminals of the first associated account and the second associated account to display the target article information and the interaction event, wherein the first associated account is an account accessing a live streaming room of the first account, and the second associated account is an account accessing a live streaming room of the second account.

In an aspect, an electronic device is provided. The electronic device includes: a processor; a memory configured to store instructions executable by the processor, wherein the processor is configured to perform the instructions to implement the following steps: creating an interaction event based on an interaction between a first account and a second account; determining first article information set by the first account and second article information set by the second account as target article information associated with the interaction event, the target article information representing a physical prize of the interaction event; and sending first prompt information to a first associated account and a second associated account, the first prompt information being configured to instruct terminals of the first associated account and the second associated account to display the target article information and the interaction event, wherein the first associated account is an account accessing a live streaming room of the first account, and the second associated account is an account accessing a live streaming room of the second account.

In an aspect, a non-transitory computer-readable storage medium is provided. When instructions in the non-transitory computer-readable storage medium are executed by a processor of an electronic device, the electronic device is enabled to perform the following steps: creating an interaction event based on an interaction between a first account and a second account; determining first article information set by the first account and second article information set by the second account as target article information associated with the interaction event, the target article information representing a physical prize of the interaction event; and sending first prompt information to a first associated account and a second associated account, the first prompt information being configured to instruct terminals of the first associated account and the second associated account to display the target article information and the interaction event, wherein the first associated account is an account accessing a live streaming room of the first account, and the second associated account is an account accessing a live streaming room of the second account.

In the present disclosure, the article information is set while the interaction event is created between the first account and the second account, and the interaction event and set article information are displayed on the terminal of the first associated account and the terminal of the second associated account, so that the first account, the second account, and the above-mentioned associated account are enabled to interact in terms of the article information within the live streaming rooms, which improves the convenience of the first account, the second account, and the above-mentioned associated account to participate in interactions in live streaming.

### BRIEF DESCRIPTION OF DRAWINGS

The drawings herein are incorporated into the description, constitute a part of the description, show embodiments conforming to the present disclosure, are configured to explain the principle of the present disclosure together with the description, and do not constitute an improper limitation of the present disclosure.
FIG. 1 is a flow chart of a method for interacting in live streaming according to an embodiment of the present disclosure;
FIG. 2 is a flow chart of interactions in a method for interacting in live streaming according to an embodiment of the present disclosure.
FIG. 3 is a schematic diagram of message interaction interfaces of a client of a first type user according to an embodiment of the present disclosure;
FIG. 4 is a schematic diagram of message interaction interfaces of a client of another first type user according to an embodiment of the present disclosure;
FIG. 5 is a schematic diagram of message interaction interfaces of a client of a second type user according to an embodiment of the present disclosure;
FIG. 6 is a schematic diagram of message interaction interfaces of a client of another second type user according to an embodiment of the present disclosure;
FIG.7 is a schematic structural diagram of an apparatus for interacting in live streaming according to an embodiment of the present disclosure; and
FIG. 8 is a schematic structural diagram of an electronic device according to an embodiment of the present disclosure.

### DESCRIPTION OF EMBODIMENTS

In order to make those of ordinary skill in the art better understand the technical solutions of the present disclosure, the technical solutions in the embodiments of the present disclosure are clearly and completely described in the following with reference to the accompanying drawings.

In the related art, in order to increase the interest, activities between users are often carried out on live streaming platforms. For example, a game activity can be held between first type users, namely, an anchor PK activity. Two first type users who participate in the game activity can compare the number of likes or the amount of rewards acquired by both of them in a certain time, the first type user with greater number or amount becomes a winner of the game, and associated users of the winner (also known as fans of the winner, which refer to second type users who follow the winner) can also acquire a certain number of physical prizes.

At present, the first type users who participate in the game need to purchase the physical prizes offline, and the second type users cannot get information about the prizes in each activity in advance as well, which results in poor convenience of the first type users and the second type users to participate in the activity, so that it is not conductive to encouraging the users to participate in the game activity.

A method for interacting in live streaming according to the embodiments of the present disclosure is applicable to interactions between the first type users and the second type users in live streaming network scenarios. The first type users refer to users who make live streaming on live streaming network platforms, also called anchors, and the second type users refer to users who watch the live streaming of the first type users on the live streaming network platforms, also called audiences. It should be noted that a user can be as an audience in a certain period of time and as an anchor in another period of time.

The live streaming network platforms can configure each anchor (namely, the first type user) with a live streaming network room (referred to as a live streaming room in short). The live streaming room can be understood as a network address. The anchor can acquire a live streaming video stream by shooting with a camera device. Then, the live streaming room to which the live streaming video stream is uploaded in real time through a client of the anchor is a live streaming room to which the live streaming video stream is uploaded through the network address. An audience can enter the live streaming room through a client of the audience, and then acquire and display the live streaming video stream uploaded by the anchor to the live streaming room in real time, so that the audience can watch live streaming on the client.

The client of the anchor and the client of the audience can be the same type of client software, that is, the anchor and the client can install the same type of client software on their own terminal devices (for example, smartphones). The client software has functions required by the anchor (including uploading the live streaming video stream and other related functions) and functions required by the audience (including accessing the live streaming room, obtaining the live streaming video stream and other related functions). When the anchor uses the client software, the client software serves as the client of the anchor, and when the audience uses the client software, the client software serves as the client of the audience.

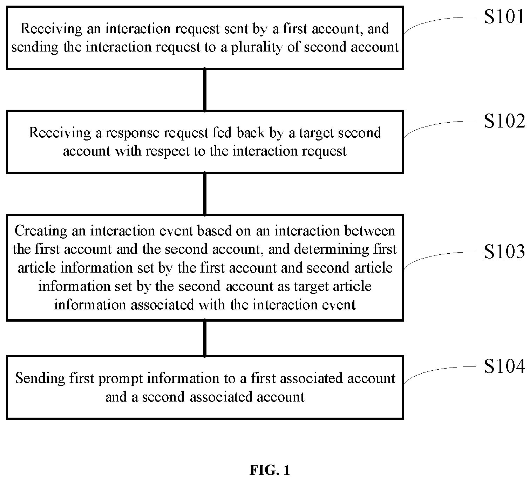

Referring to FIG. 1, FIG. 1 is a flow chart of a method for interacting in live streaming according to an embodiment of the present disclosure. The method shown in FIG. 1 is performed by a server in a live streaming network platform. As shown in FIG. 1, the method includes the following steps S101-S104.

In S101, an interaction request sent by a first account is received, and the interaction request is sent to a plurality of second accounts.

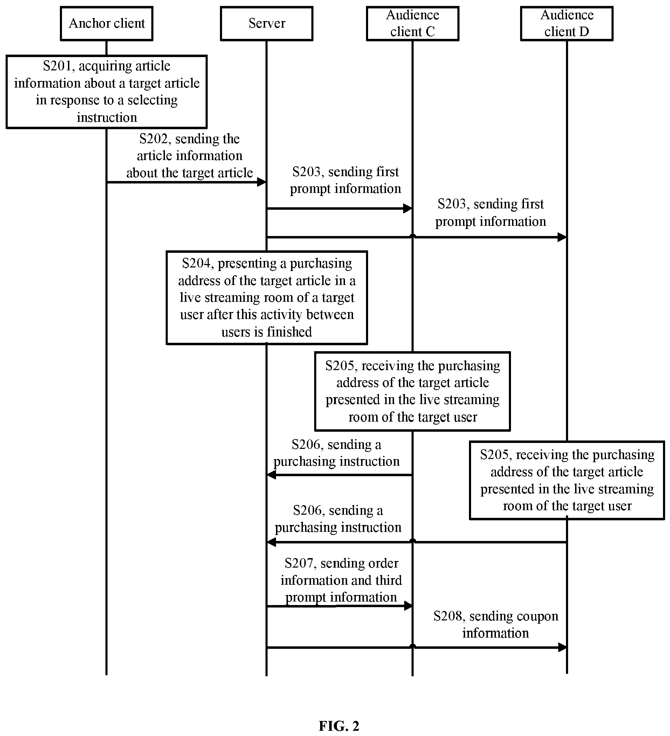

The above-mentioned interaction request is configured to request creating an interaction event, that is, the interaction request is a request creating an interaction event. In some embodiments, the interaction event includes but is not limited to an anchor PK activity in an embodiment shown in FIG. 2. The anchor PK activity refers to an activity in which at least two anchor accounts are connected to compete for certain live streaming data, such as an activity in which two anchor accounts compete for the number of people online in live streaming, an activity in which two anchors compete for virtual gifts received in a certain period of time or the like. The first account is an anchor account, and the second accounts are other anchor accounts different from the first account in the live streaming network platform. The first account sends the interaction request to the server through a client logged in with the first account, and the second accounts receive the interaction request by logging in clients with the second accounts. In some embodiments, clients used by the anchor accounts are called anchor clients.

In S102, a response request fed back by a second account with respect to the interaction request is received.

The second account refers to the second account of the plurality of second accounts that responds to the interaction request in S101. In some embodiments, the second account is also called a responding second account.

In some embodiments, the interaction event is an anchor PK activity, the interaction request sent by the first account can be a PK invitation, and each second account can choose to participate in the anchor PK activity or not after receiving the PK invitation, wherein the second account choosing to participate in the anchor PK activity is the above-mentioned second account. Upon the second account chooses to participate in the anchor PK activity, a client of the second account feeds the response request back to the server to indicate to the server that the second account participates in the anchor PK activity.

In S103, the interaction event is created based on an interaction between the first account and the second account, and first article information set by the first account and second article information set by the second account are determined as target article information associated with the interaction event.

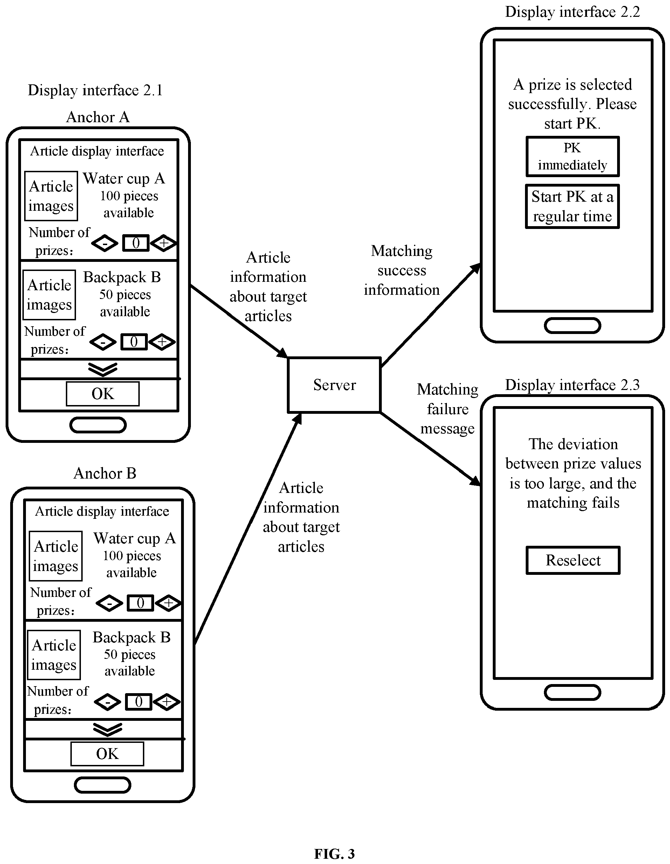

The target article information represents information corresponding to physical prizes of the interaction event. For a process of setting the article information, reference can be made to an embodiment shown in FIG. 3. Details are not described herein. Creating the interaction event based on the interactions between the first account and the second account refers to creating the interaction event between the first account and the second account.

In some embodiments, the first article information is article information about a target article selected by the first account in the embodiment shown in FIG. 2. The second article information is article information about a target article selected by the second account in the embodiment shown in FIG. 2.

In some embodiments, the interaction event is the anchor PK activity, creating the interaction event between the first account and the second account refers to initiating the anchor PK activity between the first account and the second account, and the target article information associated with the interaction event refers to information corresponding to physical prizes of the anchor PK activity. Accordingly, the first article information refers to the information corresponding to the physical prize selected by the first account, and the second article information refers to the information corresponding to the physical prize selected by the second account. In some embodiments, the interaction event is also called an interactive connection.

In S104, first prompt information is sent to a first associated account and a second associated account.

The first prompt information is configured to instruct terminals of the associated account to display the target article information and the interaction event.

The first associated account is an account accessing a live streaming room of the first account, and the second associated account is an account accessing a live streaming room of the second account.

In some embodiments, the interaction event is the anchor PK activity, the first associated account belongs to an audience who accesses the live streaming room of the first account, the second associated account belongs to an audience who accesses the live streaming room of the second account, and the first prompt information is configured to instruct clients used by the audiences (called audience clients) to display information about participating in the anchor PK activity and information about physical prizes of the anchor PK activity.

By implementing the present solution, the article information is set while the interaction event is created between the first account and the second account, and the interaction event and set article information are displayed on the terminal of the first associated account and the terminal of the second associated account, so that the first account, the second account, and the above-mentioned associated account are enabled to interact in terms of the article information within the live streaming rooms, which improves the convenience of the first account, the second account, and the above-mentioned associated account to participate in interactions in live streaming. That is to say, in the process of the anchors and the audiences participating in the interaction event, the anchors and the audiences can realize interactions of the target article information associated with the interaction event on a live streaming platform through the server, without switching to other channels for article information interactions, which improves the convenience of the anchors and the audiences to participate in the interaction event.

In some embodiments, the first article information is carried by the interaction request, and the second article information is carried by the response request.

The first article information and the second article information are carried by the interaction request and the response request respectively, a terminal of the first account does not need to send the first article information additionally after sending the interaction request, and a terminal of the second account does not need to send the second article information additionally after sending the response request, thereby reducing the number of times that the terminals of the first account and the second account interact with the server, and improving the efficiency of establishing the interactive connections.

In some embodiments, the first article information and the second article information can also be set by corresponding accounts after the server receives the response request. Therefore, before S103, the method further includes: sending pairing prompt information to the first account and the second account to prompt the first account and the second account to set article information; and receiving the first article information sent by the first account and the second article information sent by the second account.

After receiving the pairing prompt information, the clients of the first account and the second account can display a display interface 2.1 shown in FIG. 3, so that the first account and the second account can set the first article information and the second article information in the display interface 2.1.

The interaction request sent by the first account may not be responded by the second account, in which case an operation of setting the article information before sending the interaction request by the first account can become a redundant operation. After the interaction request is responded, the first account and the second account are then prompted via the pairing prompt information to set the article information, which can prevent the first account from performing the above-mentioned redundant operation, thereby improving use experience of the first account.

In some embodiments, before performing step S103, the server determines whether the first article information and the second article information satisfy a matching condition of articles.

In a case in which the first article information and the second article information satisfy the matching condition of articles, the interaction event is created between the first account and the second account, and the first article information and the second article information are determined as the target article information associated with the interaction event.

In a case in which the first article information and the second article information fail to satisfy the matching condition of articles, the interaction event is not created between the first account and the second account, and the first article information and the second article information are not determined as the target article information associated with the interaction event.

In some embodiments, in the case in which the first article information and the second article information fail to satisfy the matching condition of articles, a matching failure message is sent to the first account and the second account. For a specific form of the matching failure message, reference can be made to a display interface 2.3 of FIG. 3. The matching condition of articles includes: a deviation of article attributes between the first article information and the second article information is within a preset range of deviations. The article attributes include but are not limited to values of articles.

In some embodiments, the article attributes are the values of the articles, and the matching condition of articles refers to a deviation between a first article value and a second article value is within the preset range. The first article value refers to an article value corresponding to the first article information, and the second article value refers to an article value corresponding to the second article information.

In a case in which a deviation between the first article value and the second article value is within the preset range, the first article information and the second article information satisfy the matching condition of articles; and in a case in which a deviation between the first article value and the second article value is not within the preset range, the first article information and the second article information fail to satisfy the matching condition of articles.

In some embodiments, after S104, the method for interacting in live streaming further includes: sending an associated link corresponding to the target article information to at least one associated account of a first target account after the interaction event is finished, wherein the associated link is a link of the physical prize in the target article information.

The first target account corresponds to a result of the interaction event and is one of the first account and second account.

In some embodiments, the associated link is a purchasing address for the target article in the embodiment shown in FIG. 2.

In some embodiments, the interaction event is an anchor PK activity in which the anchors compete for the number of likes. The above-mentioned first target account is the winner among the first account and the second account that receives more likes in total during a period of the interaction event, or the first target account is one of the first account and the second account that participates in the anchor PK activity and wins.

In some embodiments, after S104, the method for interacting in live streaming further includes: sending second prompt information to an associated account of a second target account after the interaction event is finished, the second prompt information being configured to prompt associated account of the second target account to access a live streaming room of the first target account.

The second target account is the other one of the first account and the second account. In some embodiments, the interaction event is the anchor PK activity, and in the case in which the anchor PK activity is the PK activity of competing for the number of likes, the second target account is one of the first account and the second account that participates in the anchor PK activity but fails. The associated account of the second target account are also accounts accessing a live streaming room of the second target account.

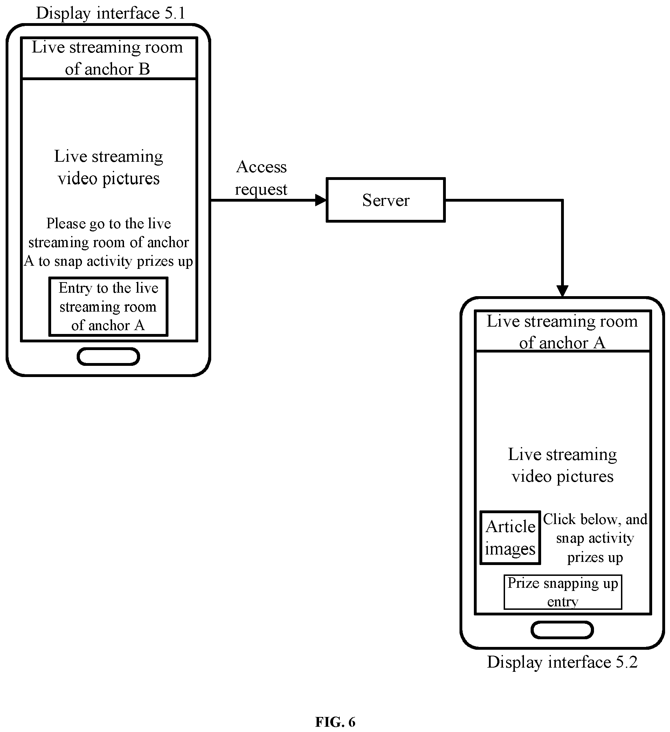

For a detailed description of the second prompt information, reference can be made to an embodiment corresponding to FIG. 6. Details are not described herein.

In some embodiments, after sending the second prompt information to the associated account of the second target account, the method for interacting in live streaming further includes:
adding the associated account of the second target account to the live streaming room of the first target account in response to a trigger action for the associated account of the second target account for the second prompt information, so that the associated account of the second target account become the associated account of the first target account.

For specific embodiments of the above-mentioned steps, reference can still be made to the embodiment corresponding to FIG. 6. Details are not described herein.

In some embodiments, after sending an associated link corresponding to the target article information to the at least one associated account of the first target account after the interaction event is finished, the method for interacting in live streaming further includes:
determining, from the at least one associated account of the first target account, a target associated account corresponding to article information of an article to be allocated, according to an interactive behavior of the at least one associated account of the first target account with the associated link.

The article information of an article to be allocated is any article information included in the target article information.

In some embodiments, the interactive behavior includes a clicking behavior of the associated account on the associated link, clients of the associated account can send purchasing instructions to the server in response to the clicking behaviors of the associated account on the associated link, and the purchasing instructions are configured to request purchasing an article pointed to by the associated link.

The target associated account can be accounts corresponding to specific clients described in step S207 of the embodiment corresponding to FIG. 2, and in particular, can be the first N associated account clicking the associated link. N is set according to the number of target articles.

In some embodiments, before determining, from the at least one associated account of the first target account, the target associated account corresponding to the article information of an article to be allocated, according to the interactive behavior of the at least one associated account of the first target account with the associated link, the method for interacting in live streaming further includes the following step:
performing the step of determining the target associated account corresponding to the article information of an article to be allocated according to the interactive behaviors of the associated account of the first target account with the associated link, in a case in which a preset interactive relationship exists between the associated account of the first target account and the first target account.

By adding a filter condition that the preset interactive relationship exists between the associated account of the first target account and the first target account, the target associated account can be defined to be created only in the associated account having the preset interactive relationship with the first target account, which can not only facilitate more associated account establishing the preset interactive relationship with the first target account to improve loyalty of users, but also get the first target account a certain profit and facilitate the first target account initiating the interaction request, thereby improving the activeness of the live streaming platform.

In some embodiments, the above-mentioned preset interactive relationship means that the associated account of the first target account are accounts that follow the first target account, that is, the associated account of the first target account are fan accounts of the first target account.

That is to say, for any audience accessing the live streaming room of the first target account, the server can respond to a purchasing instruction sent by a terminal of the audience only when the audience is a fan of the first target account.

In some embodiments, the method for interacting in live streaming further includes:
sending third prompt information to the associated account of the first target account, third prompt information being configured to prompt the associated account of the first target account to establish the preset interactive relationship with the first target account, in a case in which no preset interactive relationship exists between the associated account of the first target account and the first target account. That is, the third prompt information is configured to prompt the associated account of the first target account to follow the first target account.

By sending the third prompt information, it is convenient for the associated account and the first target account to establish the preset interactive relationship, thereby reducing operations required by the associated account to establish the preset interactive relationship and improving use experience of the associated account.

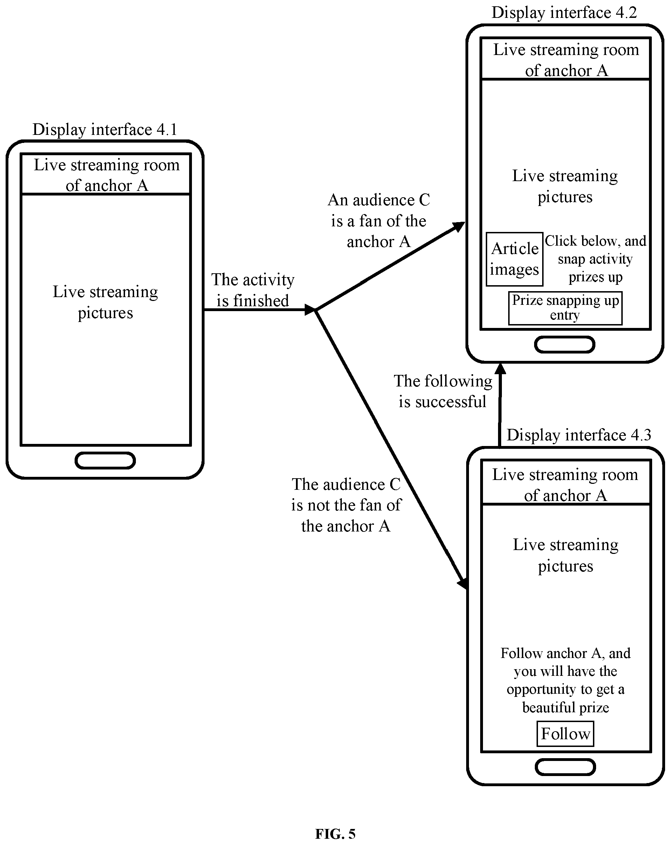

In particular, the third prompt information can be information presented in a display interface 4.3 shown in FIG. 5. For related contents, reference can be made to an embodiment corresponding to FIG. 5. Details are not described herein.

In some embodiments, after determining the target associated account corresponding to the article information of an article to be allocated according to the interactive behaviors of the associated account of the first target account with the associated link, the method for interacting in live streaming further includes:
sending order information corresponding to the article information of an article to be allocated to the target associated account. By sending the order information to the target associated account, it is convenient for the target associated account to fill in related information directly in the live streaming room, such as a delivery address and an addressee of the article to be allocated as well as other information, without switching to other pages to fill in the related information, so as to avoid the target associated account missing contents presented in the live streaming room due to filling in of the related information, thereby improving user experience.

For a specific process of sending the order information, reference can be made to S207 of the embodiment corresponding to FIG. 2. Details are not described herein.

The embodiments of the present disclosure are further illustrated below in conjunction with an interactive process of the anchor clients, the audience clients, and the server. Referring to FIG. 2, the method for interacting in live streaming according to the present disclosure includes the following steps S201-S208.

In S201, the anchor clients acquire the article information about the target article in response to a selecting instruction.

The target article refers to an article selected by the selecting instruction in an article display interface. The selecting instruction is input, by the first type users, in the article display interface with respect to this activity between users. The article display interface presents physical prizes to support the activity between the first type users, which are anchors. The physical prizes presented in the article display interface belong to article pre-stored in the inventory of a live streaming system.

The anchor clients are clients used by the first type users. In S201, the anchor clients display the article display interface within a display window, and the article display interface presents article information about a plurality of articles that can be used as the physical prizes of the activity between users. As shown in FIG. 3, the article information includes information related to the articles, such as names, images, and the number of the available articles of the articles. The activity between users can be a game activity among a plurality of anchors, such as the anchor PK activity.

The anchors can click the article information about any one or more articles displayed in the article display interface to select a corresponding article as the target article, and a clicking instruction of the anchors on the article information in the article display interface is equivalent to a form of the selecting instruction in S201.

In some embodiments, the anchors can also input the number of prizes after clicking the article information about a certain article in the article display interface. The number of prizes input by the anchors represents how many pieces of articles are used as the physical prizes of this activity between users in this activity between users. For example, article information about a water cup A can be displayed in the article display interface, and the anchors can click the article information about the water cup A and input the number of prizes, 10, which indicates that the physical prizes of this activity between users include 10 water cups A.

The article information about the target article acquired in response to the selecting instruction includes the article information presented in the article display interface and the number of prizes input by the anchors.

It should be noted that since the activity between users usually requires two or more anchors to participate in, S201 and subsequent steps performed by the anchor clients can all be considered to be performed by the client of each anchor who participates in this activity between users.

It can be understood that before the beginning of any activity between users, the first type users participating in the activity can choose whether to provide the physical prizes to the audience in this activity between users or not by themselves. In a case in which the anchor chooses to not provide the physical prizes, the clients of the anchors cannot display the article display interface, and not perform the method for interacting in live streaming according to the present disclosure accordingly. In a case in which the anchors choose to provide the physical prizes, the clients of the anchors start performing step S201, that is, displaying the article display interface and acquiring the article information about the target article selected.

In S202, the anchor clients send the article information about the target article to the server.

It can be seen from S201 that the article information sent by the anchor clients to the server indicates which articles are selected by a corresponding anchor as the physical prizes of this activity between users and how many pieces of each type of articles are selected.

For example, the article information about the target articles sent by an anchor client A includes: the water cup A with the number of prizes 10, and a backpack B with the number of prizes 5, which indicates that an anchor A selects 10 water cups A and 5 backpacks B as the physical prizes for this activity between users. The article information about the target articles sent by an anchor client B includes: a pen C with the number of prizes 5, and a shirt D with the number of prizes 4, which indicates that an anchor B selects 5 pens C and 4 shirts D as the physical prizes for this activity between users.

In conjunction with FIG. 1, the above-mentioned anchor client A is equivalent to the client of the first account in the embodiment shown in FIG. 1, and the anchor client B is equivalent to the client of the second account in the embodiment shown in FIG. 1.

In S203, the server sends the first prompt information to the audience clients.

The first prompt information is configured to prompt that the physical prizes of the activity between the first type users are the target articles. The audience clients in S203 refer to audiences accessing the live streaming rooms of the first type users within an activity time of this activity between users (namely, the second type users).

In some embodiments, the first prompt information is generated according to the article information about the target articles received from various anchor clients. The first prompt information includes types of the target articles selected by the anchors in this activity between users. For example, the first prompt information includes the prizes of this activity between users including a water cup, a backpack, a pen, and a shirt, or can further include types and specific names, which, for example, can indicate that the prizes of this activity between users include the water cups A, the backpacks B, the pens C, and the shirts D, and can further indicate the number of each type of physical prizes.

In some embodiments, the above-mentioned second type users include audiences accessing the live streaming room of any anchor who participates in the activity within the activity time. For an activity between users, an activity duration is a period of time from a start moment to an end moment of the activity and a period of preparation time before the start moment of the activity. For example, the start moment and the end moment expected for the anchor PK activity are 10:00:00 and 11:00:00 respectively, that is, the anchor PK activity starts at 10 o'clock and ends at 11 o'clock. Therefore, the above-mentioned activity duration includes a period of time from 30 minutes before the starting till the end moment, that is, the activity duration can be 9:30 to 11:00.

Accordingly, S203 can be understood as that within the period of time from 9:30 to 11:00, when the clients (namely, the clients used by the second type users) of the audiences access the live streaming room of any anchor who participates in the anchor PK activity (namely, the above-mentioned anchor A or anchor B), the server can send the above-mentioned first prompt information to the clients to prompt a corresponding audience to participate in the anchor PK activity.

In a case in which the anchor PK activity do not start when the first prompt information is displayed, the first prompt information includes the start moment of the anchor PK activity, for prompting the audiences to participate in on time.

In S204, the server presents the purchasing addresses of the target articles in a live streaming room of a target user after this activity between users is finished.

The target user is a user with the highest activity indicator among the first type users who participate in this activity between users.

An activity indicator can be any indicator reflecting a popularity degree of each anchor who participates in this activity between users within a period of time from the beginning to the end of the activity. Depending on different activity contents of the activity between users, the activity indicators are also different.

For example, this activity between users can be a PK activity of competing for the number of likes between the anchor A and the anchor B who participate in the activity, so the above-mentioned activity indicator is the number of likes received by the anchors in total within the period of time from the beginning to the end of the activity. The anchor who receives more likes in total when the activity is finished is the target user in S204.

Or, this activity between users can be a PK activity of competing for the amount of rewards between the anchor A and the anchor B who participate in the activity, so the above-mentioned activity indicator is an accumulated amount of rewards of the anchors within the period of time from the beginning to the end of the activity. The audiences can give rewards to any anchor within the period of time from the beginning to the end of the activity, and the amount of rewards can be increased every time a reward is given. For example, before the rewards are given, the anchor A has an accumulated mount of rewards, 50, and if a certain audience gives the anchor A 10 points, the accumulated amount of rewards for the anchor A increases to 60. Finally, the anchor who has a larger amount of rewards accumulated within the period of time at the time the activity is finished is the target user in S204. Of course, there can also be other activity indicators in other scenarios, such as the number of fans of the anchors, the accumulated number of barrages in the live streaming rooms of the anchors within the period of time from the beginning to the end of the activity, and the like, which will not be enumerated herein one by one.

The purchasing addresses of the target articles can be a clickable virtual snapping up button or a clickable shopping link. The purchasing addresses of the target articles is presented in the live streaming room of the target user, and the purchasing addresses of the target articles is bound to the live streaming room of the target user, and when the clients of the audiences access the live streaming room of the target user, the purchasing addresses of the target articles can be acquired.

The above-mentioned purchasing addresses are equivalent to the associated link of the target article information, and the target user is the foregoing first target account. S204 is equivalent to sending the associated link corresponding to the target article information to the associated account of the first target account after the interaction event is finished.

By sending the associated link to the associated account of the first target account, the associated account of the first target account are directed to browse the target article information through the associated link and acquire the articles corresponding to the target article information, which is conducive to attracting more accounts to become the associated account of the first target account and improving the activeness of the live streaming room of the first target account.

In some embodiments, when presenting the above-mentioned purchasing addresses, the server sets the above-mentioned purchasing addresses to be acquired and displayed only by the clients of the audiences who participate in the activity. In a case in which a certain audience does not participate in this activity between users, the client used by the audience cannot acquire the above-mentioned purchasing addresses, and, of course, cannot present the above-mentioned purchasing addresses either.

In some embodiments, the server limits the above-mentioned purchasing addresses to being acquired and presented only by a second target client, and the second target client refers to a client corresponding to an audience who participates in the activity and belongs to an associated user of the target user.

For example, if an audience E participates in this activity between users, and the audience E is a fan of the target user (supposed to be the anchor A) of this activity between users (that is, the audience E belongs to the associated user of the target user), the client of the audience E is the second target client, and the client of the audience E can perform S205 after accessing the live streaming room of the target user; and if an audience F participates in this activity between users, but the audience F is not the fan of the anchor A (that is, the audience F does not belong to the associated user of the target user), the client of the audience F cannot acquire the purchasing addresses even after accessing the live streaming room of the anchor A.

In S205, the audience clients receive the purchasing addresses of the target articles presented in the live streaming room of the target user.

In some embodiments, the audience clients include an audience client C and an audience client D shown in FIG. 2.

After acquiring the above-mentioned purchasing addresses, the audience clients can display the above-mentioned purchasing addresses within the display window, and prompt corresponding audiences to click the purchasing addresses so as to snap the physical prizes of this activity between users up.

It can be understood that since the purchasing addresses of the target articles are presented in the live streaming room of the target user, the audience clients need to access the live streaming room of the target user in order to receive the purchasing addresses of the target articles. That is to say, assuming that the anchor A is the target user for the activity, and an audience C participating in the activity has accessed the live streaming room of the anchor A when the activity is finished (that is, the audience C is watching the live streaming of the anchor A), the above-mentioned purchasing addresses can be displayed on the client of the audience C directly. Relatively, in a case in which an audience D participating in the activity has not accessed the client of the anchor A when the activity is finished, the client of the audience D cannot acquire and display the above-mentioned purchasing addresses.

In S206, the audience clients send the purchasing instructions to the server.

In some embodiments, both the audience client C and the audience client D send the purchasing instructions to the server.

The purchasing instructions carry the article information about the target articles. In some embodiments, the purchasing instructions are triggered by the audience clients in response to a clicking operation of the audiences on the above-mentioned purchasing addresses.

When there is a plurality of types of target articles used as the prizes in this activity between users, the above-mentioned purchasing addresses includes a snapping up button or shopping link corresponding to each type of target articles. After the audiences click a corresponding snapping up button or shopping link, the audience clients can trigger the purchasing instructions for the type of target articles that corresponds to the snapping up button (or the shopping link) clicked, and send the purchasing instructions to the server.

In some embodiments, when there is a plurality of types of target articles used as the prizes, it is optional that only one snapping up button is represented. When the audiences click the snapping up button, the plurality of types of target articles are presented to the audiences in some embodiments, and after the audiences select one type of target articles, its purchasing instruction is generated based on the type of target articles selected by the audiences.

In S207, the server sends the order information and the third prompt information to the audience clients.

In some embodiments, the server sends the order information and the third prompt information to the audience client C.

It should be noted that the audience clients in S207 refer to specific clients. The specific clients belong to the audience clients having a sending time of the purchasing instructions ranked in the first N, wherein N is a positive integer. In some embodiments, N is set according to the number of target articles. The third prompt information is configured to prompt users corresponding to the specific clients to fill in delivery address information corresponding to the order information.

The purchasing instructions are triggered by the clients in response to the clicking operations of the users on the purchasing addresses. Therefore, sending the order information to the specific clients is equivalent to determining the target associated account corresponding to the article information of an article to be allocated according to the interactive behavior of the associated account with the associated link (namely, the purchasing address). By screening the target associated account according to the interactive behaviors, the anchors can use a small number of articles to attract more audiences to enter into the live streaming rooms and participate in the activities, thereby improving the activeness of the live streaming platform.

In some embodiments, N is a numerical value equal to the number of target articles. For example, in a case in which the physical prizes for this activity between users include 10 water cups A, 5 backpacks B, 5 pens C, and 4 shirts D, N can be set to be 24. That is to say, after the activity is finished, when the number of audience clients sending the purchasing instructions to the server exceeds 24, only the first 24 audience clients sending the purchasing instructions can acquire the order information and the third prompt information in S207, and the clients sending the purchasing instructions after the 25^{th} client (including the 25^{th} client) do not belong to the specific clients, and cannot acquire the order information and the third prompt information in S207 either.

In some embodiments, the order information about the target articles are generated by the server. The order information includes detailed parameters and descriptions of the target articles, for example, the order information includes mailing addresses of the target articles (that is, the addresses the target articles are sent from), delivery address information about the target articles, and the like. The field for the delivery address information in the order information issued from the server is in a to-be-filled-in state and needs to be filled in by audiences themselves corresponding to the audience clients that receive the order information.

Since these target articles are distributed to the audiences who participate in this activity between users as the physical prizes for the activity, an amount to be paid in the above-mentioned order information is 0, so that the audiences receiving the above-mentioned order information only need to fill out the delivery address information so as to complete a purchasing order of the target articles. The audience clients can send the order information in which the delivery address information is filled out to the server directly. In some embodiments, the amount to be paid in the above-mentioned order information is a smaller amount, for example, 0.01, so that the audiences receiving the above-mentioned order information complete the purchasing orders of the target articles after filling out the delivery address information and paying for the smaller amount.

In some embodiments, the server can notify a logistics system to distribute the target articles specified in the order information to corresponding audiences according to delivery addresses in the order information every time the server receives the order information in which the delivery address information is filled out, update inventory information subsequently, delete records of distributed target articles from the inventory information, and subtract corresponding amounts from amounts pre-recharged by the anchors participating in the activity according to article values of the distributed target articles. The amounts pre-recharged by the anchors refer to the amount of security deposits of the anchors.

For example, if the amount of the security deposits recharged by the anchors before the activity is 100 yuan, after the activity is finished, in a case in which the server distributes a water cup of a value of 20 yuan to an audience through the logistics system, 20 yuan is subtracted from the original amount of the security deposit 100 yuan.

In some embodiments, a plurality of anchors participating in the activity can share one amount, each anchor participating in the activity can recharge the amount, and if there is still a remaining amount when the activity is finished and the distribution of the physical prizes is completed, the system can return corresponding amounts to various anchors according to a recharging proportion of various anchors.

In some embodiments, it is also possible that each anchor participating in the activity corresponds to a separate amount, and each anchor can increase his/her corresponding amount only by recharging, so that when the physical prizes are distributed, a corresponding amount can be subtracted from the amount of the anchor selecting the physical prizes, according to the article values. For example, if the anchor A selects 10 water cups A as the physical prizes, a corresponding amount is subtracted from the amount of the anchor A every time each water cup A is distributed; if the anchor B selects 5 pens B as the physical prizes, a corresponding amount is subtracted from the amount of the anchor B every time each pen C is distributed; and finally, if there is a remaining amount, it can be returned to the corresponding anchor directly.

In some embodiments, after the audiences fill out the delivery address information, and the clients of the audiences feed the order information in which the delivery address information is filled out back to the server, the clients of the audiences can display an order query entry on the display interface or display query prompt information. The query prompt information is configured to indicate that the audiences can query the order information fed back to the server through the order query entry as well as logistics information about the physical prizes acquired.

In S208, the server sends coupon information to the audience clients.

In some embodiments, the audience clients receiving the coupon information in S208 are different from the audience clients receiving the order information and the third prompt information in S207. In some embodiments, the server can send the coupon information to the audience client D.

That is to say, S208 is a step performed for a non-specific client. And compared with S207, a non-specific client refers to any audience client having a sending time of the purchasing instructions ranked the N+1^{th} and later among all the clients sending the purchasing instructions.

For example, assuming that N is equal to 24, among the audience clients sending the purchasing instructions, only clients having the sending time of the purchasing instructions ranked in the first 24 belong to the specific clients and can acquire the order information and the third prompt information, and clients having the sending time of the purchasing instructions ranked the 25^{th} and later belong to the non-specific clients. The server can perform S208 for these non-specific clients, that is, sending the coupon information to these non-specific clients.

In some embodiments, the coupon information indicates to a corresponding audience that a coupon or point of a certain amount has been distributed to the account of the audience. Or, the coupon information includes a coupon collection link or a point collection link, and prompt the audience to click the coupon collection link or the point collection link, thereby collecting a corresponding coupon or point to the account of the audience.

In order to distinguish between steps for the specific clients and the non-specific clients, the audience client C and the audience client D are shown in FIG. 2. The audience client C belongs to the specific clients, and the audience client D belongs to the non-specific clients. That is, the server can send the order information and the third prompt information to the audience client C and the coupon information to the audience client D.

The coupon information is sent to the non-specific clients, which can attract more audiences to participate in the activity in the live streaming room, thereby achieving the effect of improving the degree of participating in the activity.

On the one hand, when in a certain activity between users (such as the anchor PK activity), the anchors participating in the activity need to provide the physical prizes, the anchors only need to select the types and the number of the target articles used as the physical prizes in the article display interface, and the server can distribute corresponding inventory articles to the audiences automatically, without purchasing offline by the anchors themselves, thereby effectively improving the convenience of the anchors to initiate the activity between users.

On the other hand, before and after the beginning of a certain activity between users, the audiences can directly see which physical prizes they can get by participating in this activity in the first prompt information on the clients, and then, select whether to participate in this activity between users or not, without asking the anchors or other audiences through other channels, thereby improving the convenience of the audiences to participate in the activity between users.

In the above-mentioned method for interacting in live streaming, with respect to a process of selecting the target articles by the anchor clients as well as corresponding display interfaces, reference can be made to FIG. 3.

Taking the anchor PK activity as an example, as shown in the display interface 2.1 in FIG. 3, before initiating an anchor PK activity, the anchors participating in this anchor PK activity (namely, the anchor A and the anchor B shown in FIG. 3) can select the target articles in the article display interfaces of respective clients respectively.

For any anchor, in a case in which the anchor locks a part of the articles in advance, locked articles are presented in the article display interface. A number of the available articles is the remaining number of the locked articles. In a case in which a certain type of locked articles all have been distributed to the audiences in a previous activity, the number of the available articles is 0. In a case in which the anchor does not lock the articles in advance, each type of inventory articles can be presented in the article display interface, and the number of the available articles is the remaining inventory number of each type of articles.

After the anchor completes selection of the target articles, the client of the anchor can send the article information (including the names of the articles and the number of the articles used as the prizes) about selected target articles to the server based on the selecting instruction of the anchor.

After acquiring the article information about the target articles selected by the above-mentioned two anchors, the server can compare the values of the target articles selected by the anchor A with the values of the target articles selected by the anchor B to acquire a deviation between the article values of the two anchors.

After acquiring the deviation between the article values, the server can determine whether the deviation between the article values is within the preset range. In a case in which the deviation between the article values is within the preset range, the server can send matching success information to the clients of the two anchors. Subsequently, the clients of the anchor A and the anchor B can display pairing success information in the form of a display interface 2.2 in FIG. 3, that is, the expression "A prize is selected successfully. Please start PK". At this point, the clients of the anchor A and the anchor B can display a button for "PK immediately" and a button to "start PK at a regular time". If both of them click the button to "start PK immediately", this anchor PK activity starts, and if both of them click the button to "start PK at a regular time", this anchor PK activity starts at a moment set by both of them.

In a case in which the server determines that the deviation between the article values is not within the preset range, a matching failure message can be sent to the client of the anchor A and the client of the anchor B, and the client of the anchor A and the client of the anchor B can display the matching failure message accordingly.

A display interface of the matching failure message can be as shown in the display interface 2.3 of FIG. 3. After displaying the matching failure message, the two anchors can click a button to "reselect" to return to the display interface 2.1 and reselect the target articles.

The preset range can be set according to actual conditions, for example, it can be set to be ±50 yuan.

In some embodiments, in the flow shown in FIG. 3, when there are more than two first type users participating in an activity between users (for example, there are three or more than three anchors jointly initiate an anchor PK activity), the above-mentioned matching failure message can be sent to the client of each first type user participating in the activity as long as the deviation between the values of the target articles selected by any two of the anchors is not within the preset range.

Too large deviation between the values of the target articles selected by a plurality of first type users participating in the activity between users can cause the first type users to tend to not initiate the activity between users, thereby resulting in reduced platform activeness. By increasing the matching condition between the article information, the deviation between the values of the target articles can be controlled within a certain range, which improves the success rate of creating the interaction event and is conducive to maintaining and improving platform activeness.

In S201, the article display interface displayed by the anchor clients can present each type of inventory articles that can be used as the physical prizes for the activity, and can also present the articles locked by the anchors in advance.

Generally, when an anchor expects to initiate a plurality of activities between users in a certain live streaming process, a batch of inventory articles can be locked in advance. The articles locked by the anchor is in an unpurchaseable state, and only the anchor can select the locked articles as the target articles. After locking the batch of articles, every time the anchor participates in the activities between users in the live streaming process, the anchor can select a plurality of articles from these articles locked by himself/herself as the target articles of the activities between users in which he/she participates, until all the locked articles are distributed to the audiences.

When the anchor performs a locking operation, the server needs to lock a security deposit of an amount not less than the values of the locked articles simultaneously. When the anchor participates in the activity between users, and the locked articles are distributed to the audiences, the server can subtract an amount corresponding to the article values from these locked security deposits.

In a case in which there are remaining articles and security deposits locked by a certain anchor when live streaming is finished, a locked state of these articles and security deposits is removed. The security deposits with the locked state removed can be returned to a corresponding anchor.

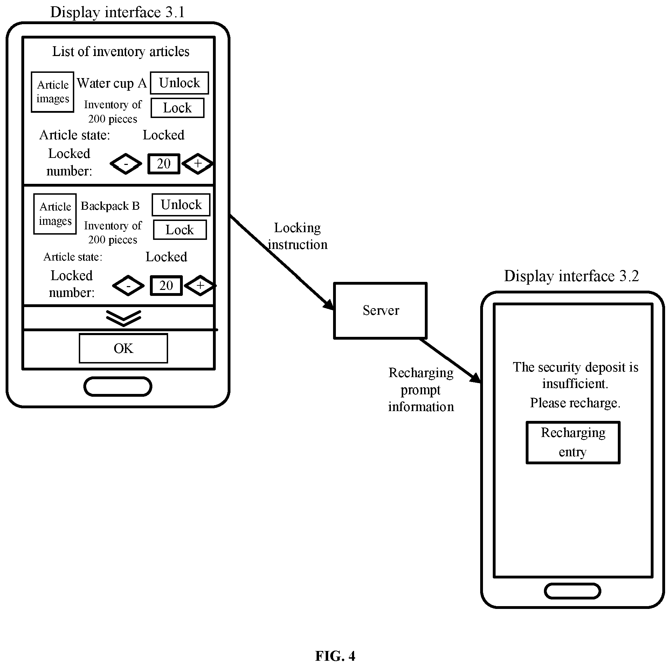

For a flow of performing the locking operation by the anchors as well as interfaces of the clients of the anchors during performing, reference can be made to FIG. 4.

As shown in FIG. 4, when an anchor selects a part of the articles needed to be locked as the physical prizes in this live streaming, the server can send the article information about the inventory articles to the client of the anchor, so that the client of the anchor can display the article information about these inventory articles within the display window, and the method of displaying can be as shown in a display interface 3.1 in FIG. 4.

In the display interface 3.1, the anchor can select whether to lock or not as well as the number of articles to be locked with respect to each type of the inventory articles, for example, the anchor can lock corresponding articles by clicking a "lock" button on the right side of the inventory articles. In a case in which locking is not required, an "unlock" button can be clicked. After the "lock" button is clicked, a column "article state" in the display interface can display that the article is in the locked state, and with respect to the article in the locked state, the anchor can set the locked number of the articles in a number block of the display interface 3.1.

After the anchor completes locking of corresponding articles, an "OK" button of the display interface 3.1 can be clicked. After the "OK" button is clicked, these articles in the locked state are articles to be locked. Subsequently, the anchor client can send article information about these articles to be locked to the server as a locking instruction.

After receiving the above-mentioned locking instructions, the server can acquire a current security deposit of the anchor as well as articles values of the articles to be locked selected by the anchor.

For example, if the articles to be locked that are selected by the anchor include 10 water cups A and 8 backpacks B, wherein each water cup A has a value of 10 yuan and each backpack B has a value of 20 yuan, the server can calculate that the articles to be locked have a value of 160 yuan (namely, the total value of 10 water cups A and 8 backpacks B).

Based on this, the server can determine whether the amount of the current security deposit of the anchor is less than the values of the articles to be locked.

If the amount of the security deposit of the anchor is not less than the values of the articles to be locked, the server can set the articles to be locked and the security deposit of the anchor into the locked state, and then, send locking success information to the client of the anchor, and the client of the anchor can present the locking success information subsequently.

If the amount of the security deposit of the anchor is less than the values of the articles to be locked, the server can send recharging prompt information to the client of the anchor, and a text configured to prompt the anchor to recharge the security deposit as well as a recharging link can be included in the recharging prompt information.

After receiving the recharging prompt information, the client of the anchor can display the recharging prompt information in the form of a display interface 3.2 in FIG. 4. The expression that "the security deposit is insufficient; please recharge" in the display interface 3.2 is the above-mentioned text for prompting the anchor to recharge the security deposit, and a recharging entry is a virtual button. After the anchor clicks the virtual button, the client of the anchor can skip to a corresponding recharging interface according to the recharging link issued by the server. Upon completion of the recharging, the client of the anchor can feed a recharging instruction back to the server, and the amount of the security deposit recharged by the anchor is carried in the recharging instruction. In a case in which the server determines that the amount of the security deposit of the anchor after recharging is not less than the values of the articles to be locked, the locking success information is sent to the client of the anchor.

In some embodiments, when the anchor chooses to lock a part of the articles, the server can determine whether the amount of the security deposit of the anchor is greater than a security deposit threshold value (as an example, the security deposit threshold value can be set to be 0) in advance. In a case in which the amount of the security deposit of the anchor is not less than the security deposit threshold, the server can send the above-mentioned recharging prompt information to the client of the anchor directly, thereby allowing the client of the anchor to enter into the display interface 3.2 directly.

When the anchor needs to initiate a plurality of activities between users in a live streaming process, the anchor can lock a part of the articles in the inventory in advance. As such, on the one hand, too less inventory articles can be avoided in the live streaming process, as a result of which, the anchor cannot initiate subsequent activities between users, and on the other hand, before initiating the activities between users every time, the anchor can select the target articles from a small amount of locked articles presented in the article display interface, without selecting the target articles from a large number of inventory articles every time, thereby improving the convenience of the anchor to select the target articles.

As mentioned above, when an activity between users is finished, the server can present the purchasing addresses in the live streaming room of the target user, and have a limitation that the purchasing addresses are only displayed in the clients of the audiences who participate in this activity between users and belong to the associated users of the target user (namely, fans of the target user), in which case, the clients of the second type users can interact with the server according to a flow and interaction interfaces shown in FIG. 5 after this activity between users is finished.

Taking the audience C as an example, after the audience C accesses the live streaming room of the anchor A, an interface of its client can be as shown in a display interface 4.1 in FIG. 5. In the display interface 4.1, the audience C can watch the live streaming of the anchor A.

Assuming that the anchor A initiates an activity between users during watching, the audience C participates in this activity between users, and the server determines, after the activity is finished, that the anchor A is the target user of this activity (for example, the anchor A acquires the highest number of likes within the time from the beginning to the end of the activity), then the purchasing address of the target article is presented in the live streaming room of the anchor A.

At this point, in a case in which the audience C is an associated user of the anchor A, that is, the audience is a fan of the anchor A, the client of the audience C can switch to a display interface 4.2 in FIG. 5. In the display interface 4.2, the client of the audience C can display a snapping up button (namely, a "prize snapping up entry" shown) below an original video playing interface. Thus, the audience C can click the snapping up button in the display interface 4.2, so that the client sends a purchasing instruction to the server.

In a case in which the audience C is not the associated user of the anchor A (that is, the audience C is not the fan of the anchor A), the client of the audience C can switch to a display interface 4.3 in FIG. 5. Instead of the above-mentioned snapping up button, associated prompt information is displayed in the display interface 4.3. As shown in the display interface 4.3, the associated prompt information can be the expression "follow the anchor A, and you will have the opportunity to get a beautiful prize", and meanwhile, a "follow" button shown can be displayed below the associated prompt information. In this case, the audience can click the "follow" button directly. After clicking, the client of the audience C sends a following request to the server to request becoming the associated account of the anchor A, that is, the fan of the anchor A. After receiving the following request, the server determines the audience C as the associated user (namely, the fan) of the anchor A. Subsequently, the client of the audience C can switch from the display interface 4.3 to the display interface 4.2 to display the snapping up button to the audience C.

With the process of interacting shown in FIG. 5, the target user participating in the activity between users can increase the number of associated users rapidly, which is conducive to improving platform activeness.

In some embodiments, after the server presents the purchasing addresses in the live steaming room of the target user, it is possible that a part of the audiences participating in this activity between users do not access the live streaming room of the target user currently. Referring to FIG. 6, in this case, the server can identify a first target client and send the second prompt information to the first target client.

The first target client refers to clients used by the audiences who participate in this activity between users, but access a live streaming room of a non-target user when the activity is finished. That is to say, the first target client is also the audience client, and equivalently, the server identifies an audience client that does not access the live streaming room of the target user when the activity is finished.

The non-target user refers to other anchors other than the target user of this activity between users.

For example, the anchor A and the anchor B jointly initiate an anchor PK activity. When the activity is finished, the anchor A is the target user of this activity. However, a part of the audiences can participate in this activity in the live streaming room of the anchor B. When the activity is finished, this part of audiences is still in the live streaming room of the anchor B. The clients used by this part of audiences are the foregoing first target clients.

For the audience clients, if an audience participates in an activity between users, and this audience does not access the live streaming room of the target user when the activity is finished, the client used by this audience can receive the second prompt information, and then, present the second prompt information. The second prompt information indicates that the purchasing addresses of the target articles are in the live streaming room of the target user.

A display interface of the second prompt information can be as shown in a display interface 5.1 in FIG. 6. In the display interface 5.1, the expression "please go to the live streaming room of the anchor A to snap activity prizes up" belongs to the second prompt information in some embodiments. With the displaying of the second prompt information, audiences who participate in the activity but do not access the live streaming room of the target user currently can be prompted to access the live streaming room of the target user in time.

In some embodiments, there can be a virtual button of "entry to the live streaming room of anchor A" as shown in the display interface 5.1 displaying below the second prompt information. After the audience clicks the virtual button, the client of the audience can send an accessing request accessing the live streaming room of the anchor A to the server, enabling the audience to access the live streaming room of the anchor A (namely, the target user of this activity between users).

After the audience accesses the live streaming room of the anchor A, if the audience is a fan of the anchor A, the client of the audience displays a display interface 5.2 shown in FIG. 6, and the audience can click a corresponding button to snap the prizes up; and if the audience is not the fan of the anchor A, the client of the audience can display the foregoing display interface 4.3 in FIG. 5 to direct the audience to follow the anchor A.

With the process of interacting as shown in FIG. 6, after the audience participates in the activity between users, when the activity prizes can be snapped up, the client of the audience can output the second prompt information automatically to prompt the audience to enter into the live streaming room of the target user, so that the audience can access other live streaming rooms after participating in the activity, without frequent attention to the time of snapping up the activity prizes, thereby improving user experience of the audience.

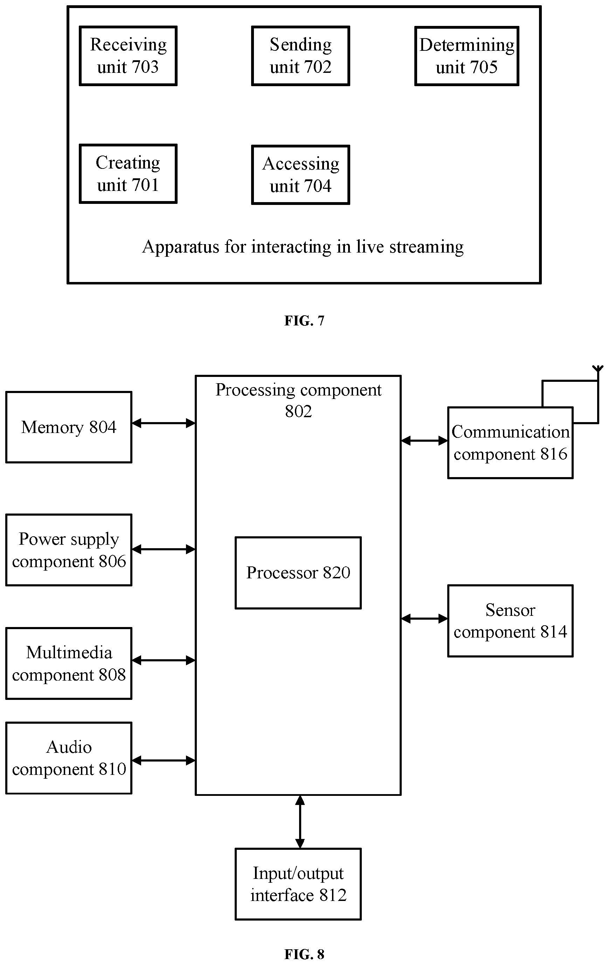

In conjunction with the method for interacting in live streaming according to the present disclosure, according to an embodiment of the present disclosure, an apparatus for interacting in live streaming is provided. The apparatus is applied to the server. Referring to FIG. 7, the apparatus includes:
a creating unit 701 configured to create an interaction event based on an interaction between a first account and a second account, wherein
the creating unit 701 is further configured to determine first article information set by the first account and second article information set by the second account as target article information associated with interaction event, the target article information representing a physical prize of the interaction event; and
a sending unit 702 configured to send first prompt information to a first associated account and a second associated account, the first prompt information being configured to instruct terminals of the first associated account and the second associated account to display the target article information and the interaction event, wherein the first associated account is an account accessing a live streaming room of the first account, and the second associated account is an account accessing a live streaming room of the second account.

In some embodiments, the first article information is carried by an interaction request sent by the first account, and the second article information is carried by a response request sent by the second account.

In some embodiments, the sending unit 702 is further configured to: send pairing prompt information to the first account and the second account, the pairing prompt information being configured to prompt the first account and the second account to set article information.

The apparatus further includes: a receiving unit 703 configured to receive the first article information sent by the first account and the second article information sent by the second account.

In some embodiments, the creating unit 701 is further configured to: create the interaction event in a case in which the first article information and the second article information satisfy a matching condition of articles.

In some embodiments, the sending unit 702 is further configured to: send a matching failure message to the first account and the second account in a case in which the first article information and the second article information fail to satisfy the matching condition of articles.

In some embodiments, the matching condition of articles includes: a deviation of article attributes between the first article information and the second article information is within a preset range of deviations.

In some embodiments, the sending unit 702 is further configured to: send an associated link of the target article information to at least one associated account of a first target account after the interaction event is finished, wherein the first target account corresponds to a result of the interaction event and is one of the first account and the second account.

In some embodiments, the sending unit 702 is further configured to: send second prompt information to an associated account of a second target account after the interaction event is finished, the second prompt information being configured to prompt associated account of the second target account to access a live streaming room of the first target account, wherein the second target account is the other one of the first account and the second account.

In some embodiments, the apparatus further includes: an accessing unit 704 configured to allow the associated account of the second target account to access the live streaming room of the first target account in response to a trigger action for the second prompt information by the associated account of the second target account, so that the associated account of the second target account become the associated account of the first target account.

In some embodiments, the apparatus further includes: a determining unit 705 configured to determine, from the at least one associated account of the first target account, a target associated account corresponding to article information of an article to be allocated, according to an interactive behavior of the at least one associated account with the associated link, wherein the article information of an article to be allocated is any article information included in the target article information.

In some embodiments, the determining unit 705 is further configured to: determine the target associated account corresponding to the article information of an article to be allocated according to the interactive behavior of the at least one associated account of the first target account with the associated link, in a case in which a preset interactive relationship exists between the associated account of the first target account and the first target account.

In some embodiments, the sending unit 702 is further configured to send third prompt information to the associated account of the first target account, the third prompt information being configured to prompt the associated account of the first target account to establish the preset interactive relationship with the first target account, in a case in which no preset interactive relationship exists between the associated account of the first target account and the first target account.

In some embodiments, the sending unit 702 is further configured to: send order information corresponding to the article information of an article to be allocated to the target associated account.

With the apparatus for interacting in live streaming according to the present disclosure, the article information is set while the interaction event is created between the first account and the second account, and the interaction event and the set article information are displayed on a terminal of the first associated account and a terminal of the second associated account, so that the first account, the second account, and the above-mentioned associated account are enabled to interact in terms of the article information within the live streaming rooms, which improves the convenience of the first account, the second account, and the above-mentioned associated account to participate in interactions in live streaming.

FIG. 8 is structural diagram of an electronic device configured to perform the method for interacting in live streaming described above according to an embodiment of the present disclosure. For example, the electronic device can be a terminal device such as a mobile phone, a computer, and a tablet device, and can also be a server device.

Referring to FIG. 8, the electronic device includes the following one or more components: a processing component 802, a memory 804, a power supply component 806, a multimedia component 808, an audio component 810, an input/output (I/O) interface 812, a sensor component 814, and a communication component 816.

The processing component 802 is generally configured to perform an overall operation of the electronic device, for example, operations associated with displaying, phone calling, data communication, camera operations, and recording operation. The processing component 802 includes one or more of the following: processors 820 to perform instructions, so as to complete all or part of the steps of the above-mentioned method. Furthermore, the processing component 802 includes one or more modules to facilitate interactions between the processing component 802 and other components. For example, the processing component 802 includes a multimedia module to facilitate interactions between the multimedia component 808 and the processing component 802.

The memory 804 is configured to store various types of data to support the operations of the electronic device. Examples of these data include any application program or method instructions operated on the electronic device, contact data, phone book data, messages, pictures, videos, and the like.

The power supply component 806 supplies power to various components of the electronic device. The power supply component 806 includes a power supply management system, one or more power supplies, and other components associated with generation, management and power distribution of the electronic device.

The multimedia component 808 includes a screen providing an output interface between the electronic device and a user. In some embodiments, the screen includes a liquid crystal display (LCD) and a touch panel (TP). If the screen includes the touch panel, it can be implemented as a touch screen to receive an input signal from the user. The touch panel includes one or more touch sensors to sense touching, sliding, and gestures on the touch panel. The touch sensors can not only sense a boundary of a touching or sliding action, but also detect a duration and pressure related to a touching or sliding operation. In some embodiments, the multimedia component 808 includes a front-facing camera and/or a rear-facing camera. When the electronic device is in an operation mode such as a shooting mode or a video mode, the front-facing camera and/or the rear-facing camera can receive external multimedia data. Each of the front-facing camera and rear-facing camera can be a fixed optical lens system or has a focal distance and an optical zoom capability.

The audio component 810 is configured to output and/or input audio signals. For example, the audio component 810 includes a microphone (MIC), and when the electronic device is in the operation mode such as a calling mode, a recording mode and a voice recognition mode, the microphone is configured to receive external audio signals. The audio signals received can be further stored in the memory 804 or sent via the communication component 816. In some embodiments, the audio component 810 further includes a loudspeaker configured to output the audio signals.

The I/O interface 812 provides an interface between the processing component 802 and a peripheral interface module. The above-mentioned peripheral interface module can be a keyboard, a clicking wheel, a button, and the like. These buttons include but be not limited to: a home page button, a volume button, a start button, and a locking button.

The sensor component 814 include one or more sensors configured to provide state evaluations in various aspects for the electronic device.

The communication component 816 is configured to facilitate communications between the electronic device and other devices in a wired or wireless fashion. The electronic device can access a wireless network based on communication standards, such as WiFi, an operator network (such as 2G, 3G, 4G or 5G) or a combination thereof.

In some embodiments, the electronic device can be implemented by one or more of the following: application specific integrated circuits (ASIC), data signal processors (DSP), data signal processing devices (DSPD), programmable logic devices (PLD), field programmable gate arrays (FPGA), controllers, microcontrollers, microprocessors or other electronic elements, and configured to perform the method for interacting in live streaming according to any of the embodiments of the present disclosure.

When the above-mentioned electronic device is the terminal device such as the mobile phone, the computer, and the tablet device, the electronic device includes each of the components shown in FIG. 8. When the above-mentioned device is the server device, the electronic device can only include the memory 804, the power supply component 806, the processing component 802, and the communication component 816 in FIG. 8.

According to an embodiment of the present disclosure, a non-transitory computer-readable storage medium is further provided. The non-transitory computer-readable storage medium is configured to store a computer program. The computer program, when executed, is specifically configured to implement the method for interacting in live streaming according to any of the embodiments of the present disclosure.

According to an embodiment of the present disclosure, a computer program product is provided. The computer program product, when executed, is configured to implement the method for interacting in live streaming according to any of the embodiments of the present disclosure.

The description and embodiments are considered to be exemplary merely, and the true scope and spirit of the present disclosure is indicated by the following claims.

## Claims

1. A method for interacting in live streaming, performed by an electronic device, and **characterized by** comprising:
creating (S103) an interaction event based on an interaction between a first account and a second account;
determining (S103) first article information set by the first account and second article information set by the second account as target article information associated with the interaction event, the target article information representing a physical prize of the interaction event; and
sending (S104) first prompt information to a first associated account and a second associated account, the first prompt information being configured to instruct terminals of the first associated account and the second associated account to display the target article information and the interaction event, wherein the first associated account is an account accessing a live streaming room of the first account, and the second associated account is an account accessing a live streaming room of the second account.

2. The method according to claim 1, wherein the first article information is carried by an interaction request sent by the first account, and the second article information is carried by a response request sent by the second account.

3. The method according to claim 1 or 2, further comprising:
sending pairing prompt information to the first account and the second account, the pairing prompt information being configured to prompt the first account and the second account to set article information; and
receiving the first article information sent by the first account and the second article information sent by the second account.

4. The method according to any of claims 1 to 3, further comprising:
creating the interaction event in a case in which the first article information and the second article information satisfy a matching condition of articles.

5. The method according to claim 4, further comprising: sending a matching failure message to the first account and the second account in a case in which the first article information and the second article information fail to satisfy the matching condition of articles.

6. The method according to any of claims 1 to 5, further comprising: sending an associated link of the target article information to an associated account of a first target account after the interaction event is finished, wherein the first target account corresponds to a result of the interaction event and is one of the first account and the second account.

7. The method according to any of claims 1 to 6, further comprising: sending second prompt information to an associated account of a second target account after the interaction event is finished, the second prompt information being configured to prompt associated account of the second target account to access a live streaming room of a first target account, wherein the first target account corresponds to a result of the interaction event and is one of the first account and the second account, and the second target account is the other one of the first account and the second account.

8. The method according to claim 7, further comprising:
adding the associated account of the second target account to a live streaming room of the first target account in response to a trigger action for the second prompt information by the associated account of the second target account, so that the associated account of the second target account becomes an associated account of the first target account.

9. The method according to claim 6, further comprising:
determining, from at least one associated account of the first target account, a target associated account corresponding to article information of an article to be allocated according to an interactive behavior of the at least one associated account with the associated link, wherein the article information of an article to be allocated is any article information comprised in the target article information.

10. The method according to claim 9, wherein the target associated account corresponding to the article information of the article to be allocated is determined from the at least one associated account according to the interactive behavior of the at least one associated account of the first target account with the associated link in a case in which a preset interactive relationship exists between the associated account of the first target account and the first target account.

11. The method according to claim 10, further comprising: sending third prompt information to the associated account of the first target account, the third prompt information being configured to prompt the associated account of the first target account to establish the preset interactive relationship with the first target account, in a case in which no preset interactive relationship exists between the associated account of the first target account and the first target account.

12. The method according to any of claims 9 to 11, further comprising:
sending order information corresponding to the article information of the article to be allocated to the target associated account.

13. An apparatus for interacting in live streaming, **characterized by** comprising:
a creating unit (701) configured to create an interaction event based on an interaction between a first account and a second account; wherein the creating unit (701) is further configured to determine first article information set by the first account and second article information set by the second account as target article information associated with the interaction event, the target article information representing a physical prize of the interaction event; and
a sending unit (702) configured to send first prompt information to a first associated account and a second associated account, the first prompt information being configured to instruct terminals of the first associated account and the second associated account to display the target article information and the interaction event, wherein the first associated account is an account accessing a live streaming room of the first account, and the second associated account is an account accessing a live streaming room of the second account.

14. The apparatus according to claim 13, wherein the first article information is carried by an interaction request sent by the first account, and the second article information is carried by a response request sent by the second account.

15. A non-transitory computer-readable storage medium for storing a computer program, which, when executed, is configured to perform the following steps:
creating an interaction event based on an interaction between a first account and a second account;
determining first article information set by the first account and second article information set by the second account as target article information associated with the interaction event, the target article information representing a physical prize of the interaction event; and
sending first prompt information to a first associated account and a second associated account, the first prompt information being configured to instruct terminals of the first associated account and the second associated account to display the target article information and the interaction event, wherein the first associated account is an account accessing a live streaming room of the first account, and the second associated account is an account accessing a live streaming room of the second account.
